# EUROPEAN PATENT SPECIFICATION

(11) **EP 3 842 883 B1**
(45) Date of publication and mention of the grant of the patent: **06.03.2024**
(21) Application number: 19851784.9
(22) Date of filing: 18.07.2019
(51) Int. Cl.: G05B 19/418, G06K 7/10

(54) **PRODUCTION EQUIPMENT SYSTEM AND PRODUCTION METHOD**
PRODUKTIONSAUSRÜSTUNGSSYSTEM UND PRODUKTIONSVERFAHREN
SYSTÈME D'ÉQUIPEMENT DE PRODUCTION ET PROCÉDÉ DE PRODUCTION

(30) Priority: 22.08.2018 JP 2018155584
(43) Date of publication of application: 30.06.2021
(73) Proprietor: OMRON Corporation, Shiokoji-dori, Shimogyo-ku, Kyoto-shi Kyoto 600-8530 (JP)
(72) Inventor: ARAI, Wataru, Kizugawa-shi, Kyoto 619-0283 (JP)
(74) Representative: Becker, Eberhard
(86) International application number: PCT/JP2019/028196
(87) International publication number: WO 2020/039805

(56) References cited:
- EP-A1- 2 133 814
- JP-A- 2012 150 646
- JP-A- 2012 150 646
- JP-A- 2016 143 290
- GEORGE Q HUANG ET AL: "RFID-enabled real-time wireless manufacturing for adaptive assembly planning and control", JOURNAL OF INTELLIGENT MANUFACTURING, KLUWER ACADEMIC PUBLISHERS, BO, vol. 19, no. 6, 20 June 2008 (2008-06-20), pages 701-713, XP019644130, ISSN: 1572-8145, DOI: 10.1007/S10845-008-0121-5

## Description

### [Technical Field]

The present invention relates to a production equipment system, production equipment, and a production method.

### [Background Art]

In a cell production manner, there are cases in which replacement and/or rearrangement of production equipment are performed for change of setup. A cell production manner is a production manner in which one or several workers are responsible for all the processes of mounting, assembling, processing, and testing of parts in the assembly manufacturing industry.

Conventionally, after replacement and/or rearrangement of production equipment, work (a) or (b) is executed.

(a) A worker checks whether or not there is a mistake in production equipment. In addition, for each piece of production equipment, a worker directly performs setting of operations through a human machine interface (HMI) or the like.
(b) Each piece of production equipment is connected using lines. Then, each piece of production equipment receives setting data from production equipment disposed on an upstream side and setting of operations is performed using the setting data (see Patent Literature 1).

Patent literature JP 2012-150646 A discloses a production facility and a production system. In the production facility of the patent literature JP 2012-150646 A, when a work-piece is transferred between two production facilities, information necessary for cooperation of workpiece conveyance and information necessary for operation control of operations on the work-piece are transferred between the production facility and the other production facility, as cooperation information, and operation control means controls operations of own production facility for the work-piece transferred from the other production facility, using the cooperation information also obtained from the other production facility.

Patent literature EP 2133814 A1 discloses an RFID system for a plurality of wireless tags that move in a same direction. The system of the patent literature EP 2133814 A1 includes a first reader/writer that receives identification information of the wireless tags from a first group of the wireless tags that are positioned at regular intervals, and writes and reads information to and from the first group of the wireless tags based on the identification information, and a second reader/writer that receives the identification information from a second group of the wireless tags each of which is positioned between every two adjacent wireless tags belonging to the first group, and writes and reads information to and from the second group of the wireless tags when the first reader/writer writes and reads information to and from the first group of the wireless tags.

Non-patent literature GEORGE Q HUANG ET AL: "RFID-enabled real-time wireless manufacturing for adaptive assembly planning and control", JOURNAL OF INTELLIGENT MANUFACTURING, KLUWER ACADEMIC PUBLISHERS, BO, vol. 19, no. 6, 20 June 2008, pages 701-713, XP019644130, ISSN: 1572-8145, DOI: 10.1007/ S510845-008-0121-5, is related to wireless manufacturing technology, proposing a WM framework where RFID devices are deployed to workstations, critical tools, key components, and containers of WIP (Work In Progress) materials to turn them into so-called smart objects, and the study is based on a simplified product assembly line, in which smart objects are tracked and traced and shop-floor disturbances are detected and fed back to decision makers on a real-time basis.

### [Citation List]

### [Patent Literature]

[Patent Literature 1]
Japanese Patent Laid-Open No. 2003-99113 (published on April 4, 2003)

### [Summary of Invention]

### [Technical Problem]

In the work (a) described above, since the number of work processes performed by a worker is large, there is a problem that workers easily make mistakes in setting production equipment.

In the work (b) described above, each time replacement and/or rearrangement of production equipment is performed, insertion/extraction of wirings for the production equipment is necessary. For this reason, there are problems that workers easily make mistakes in setting production equipment due to a large number of work processes performed by a worker, and mistakes in setting production equipment due to defective insertion/extraction of wirings may easily occur.

An objective of one aspect of the present invention is to realize a production equipment system, production equipment, and a production method in which mistakes in setting production equipment do not easily occur.

### [Solution to Problem]

The present invention is set forth and characterized in the independent claims, while the dependent claims describe other characteristics of the invention.

According to the configuration described above, the production equipment receives setting data from production equipment that is adjacently installed and performs setting of operations in the production equipment on the basis of the setting data. In accordance with this, when all the setting data of a plurality of pieces of production equipment is supplied to one of the plurality of pieces of the production equipment, by causing the setting data to go through each of the pieces of the production equipment, all the settings of operations of the plurality of pieces of production equipment can be performed.

According to the configuration described above, a worker simply supplies all the setting data of the plurality of pieces of production equipment to one of the plurality of pieces of production equipment, and thus, the number of work processes performed by the worker is small. For this reason, workers making mistakes in setting the production equipment does not easily occur. In addition, according to the configuration described above, each time replacement and/or rearrangement of the production equipment are performed, insertion and extraction of wirings for each of the pieces of production equipment are not necessary. Thus, worker's making mistakes in the production equipment does not easily occur due to a decrease in the number of work processes performed by the worker, and mistakes in setting the production equipment due to a defect in insertion and extraction of wirings does not occur. Therefore, according to the configuration described above, a production equipment system and a production method in which mistakes in setting production equipment does not easily occur can be realized.

### [Advantageous Effects of Invention]

According to one aspect of the present invention, a production equipment system, production equipment, and a production method in which mistakes in setting production equipment may not easily occur can be realized.

### [Brief Description of Drawings]

Fig. 1 is a block diagram illustrating a schematic configuration of a production equipment system according to an embodiment relating to one aspect of the present invention.
Fig. 2 is a flowchart illustrating the flow of an operation of the production equipment system illustrated in Fig. 1.
Fig. 3 is a block diagram illustrating a schematic configuration of a production equipment system according to a modified example of the embodiment relating to one aspect of the present invention.
Fig. 4 is a table illustrating one example of association between a type of product to be produced and setting data (setting information of each piece of production equipment for producing the product).
Fig. 5 is a table illustrating another example of association between a type of product to be produced and setting data (setting information of each piece of production equipment for producing the product).
Fig. 6 is a diagram illustrating a specific example of setting data.
   (a) to (e) of Fig. 7 are schematic diagrams respectively illustrating installation patterns of a plurality of pieces of production equipment.
Fig. 8 is a diagram illustrating a communication distance of a proximity wireless communication unit.

### [Description of Embodiments]

Hereinafter, an embodiment according to one aspect of the present invention (hereinafter, referred to as also as "this embodiment") will be described with reference to the drawings.

### 1. Application Example

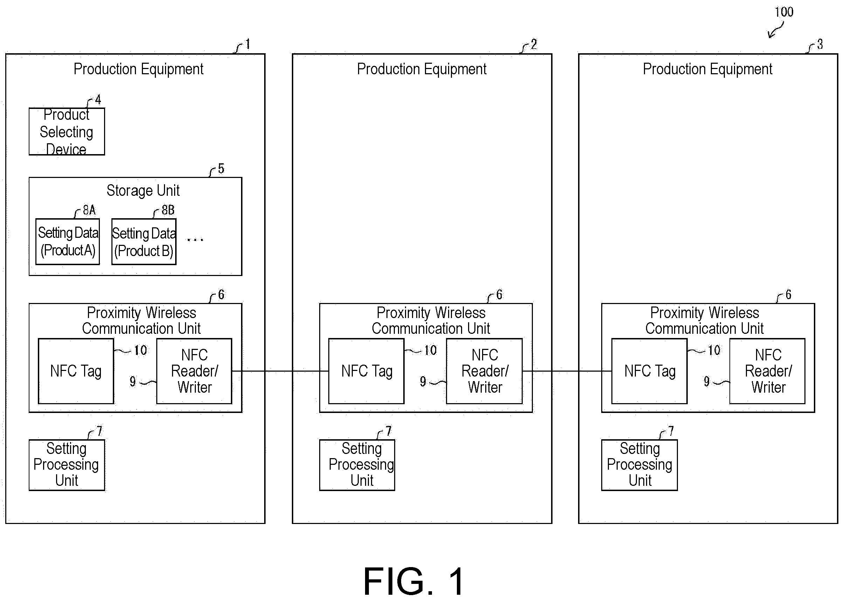

Fig. 1 is a block diagram illustrating a schematic configuration of a production equipment system 100 according to this embodiment. The production equipment system 100 is used in a cell production manner. The production equipment system 100 includes a plurality of pieces of production equipment 1 to 3 configuring a production line according to the cell production manner. Each of the plurality of pieces of production equipment 1 to 3 is movable. Each of the pieces of production equipment 1 to 3 includes a production device and a stand on which the production device is mounted, and examples of the production device include a pressing machine, an injection molding machine, and a press fitting machine.

The production equipment 1 includes a product selecting device 4 and a storage unit 5. In addition, each of the pieces of production equipment 1 to 3 includes a proximity wireless communication unit 6 and a setting processing unit 7.

The product selecting device 4 selects a product to be produced by the production equipment system 100. Setting data (product A) 8A, setting data (product B) 8B, ... are stored in the storage unit 5. The setting data (product A) 8A, the setting data (product B) 8B, ... are data, which is set for each of products (the product A, the product B, ...) that can be produced by the production equipment system 100, used for performing setting of operations in each of the pieces of production equipment 1 to 3. In each piece of the setting data (product A) 8A, the setting data (product B) 8B, ..., a type of product to be produced and setting information of each of the pieces of production equipment 1 to 3 for producing the product are associated with each other.

The proximity wireless communication unit 6 includes an NFC reader/writer (an upstream-side communication unit) 9 and an NFC tag (a downstream-side communication unit) 10. The NFC reader/writer 9 communicates with the proximity wireless communication unit 6 of production equipment on a downstream side in the flow of the setting data (product A) 8A, the setting data (product B) 8B, .... The NFC tag 10 communicates with the proximity wireless communication unit 6 of production equipment on an upstream side in the flow of the setting data (product A) 8A, the setting data (product B) 8B, .... In the production equipment system 100, the flow of the setting data (product A) 8A, the setting data (product B) 8B, ... is assumed to be the production equipment 1, the production equipment 2, and the production equipment 3 in order from the upstream side. The setting processing unit 7 performs setting of operations in corresponding one of the pieces of production equipment 1 to 3 on the basis of one of the setting data (product A) 8A, the setting data (product B) 8B, ....

From here, a case in which the production equipment system 100 produces the product A will be described as an example. The product selecting device 4 selects the product A as a product to be produced by the production equipment system 100. When the product selecting device 4 selects the product A, the setting processing unit 7 of the production equipment 1 performs setting of operations in the production equipment 1 on the basis of the setting data (product A) 8A corresponding to the product A, and the setting data (product A) 8A flows.

The proximity wireless communication unit 6 has a communication distance (communicable distance) that is equal to or smaller than a half a distance between centers of the pieces of production equipment in a state of being adjacently installed. The setting processing unit 7 of each of pieces of production equipment 2 and 3 performs setting of operations in the production equipment using the setting data (the product A) 8A received by the proximity wireless communication unit 6 from the production equipment that is adjacently installed. In the production equipment system 100, the production equipment 1 and the production equipment 2 are adjacent to each other, and the production equipment 2 and the production equipment 3 are adjacent to each other. Installation of the pieces of production equipment 1 to 3 may be performed by a worker or may be performed by an autonomous mobile robot. As one example in which the installation of the pieces of production equipment 1 to 3 is performed by a worker, there is a case in which a wheel is disposed in the stand of each of the pieces of production equipment 1 to 3, and a worker pushes the stand to move the production equipment to an installation place and a case in which a worker lifts up production equipment and moves the production equipment to an installation place. In addition, each of the pieces of production equipment 1 to 3 may be moved to an installation place in the state of being loaded in an autonomous mobile robot and be operated at the installation place.

Described more specifically, the setting processing unit 7 of the production equipment 2 performs setting of operations in the production equipment 2 using the setting data (the product A) 8A received by the proximity wireless communication unit 6 of the production equipment 2 from the proximity wireless communication unit 6 of the production equipment 1 that is adjacently installed.

Similarly, the setting processing unit 7 of the production equipment 3 performs setting of operations in the production equipment 3 using the setting data (the product A) 8A received by the proximity wireless communication unit 6 of the production equipment 3 from the proximity wireless communication unit 6 of the production equipment 2 that is adjacently installed.

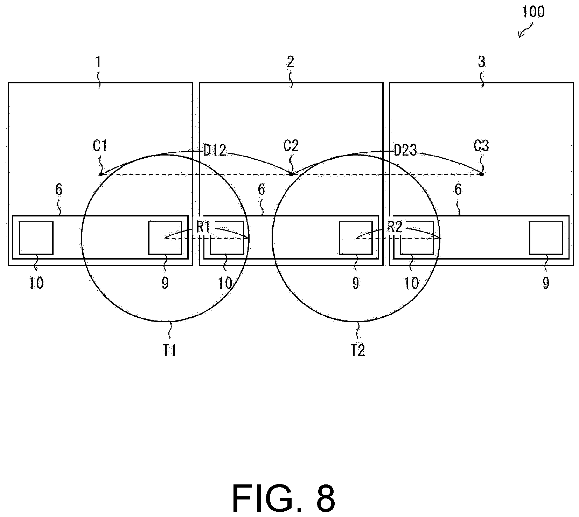

Fig. 8 is a diagram illustrating the communication distance of the proximity wireless communication unit 6. In Fig. 8, for simplification of description, illustration of the product selecting device 4, the storage unit 5, the setting processing unit 7, and the setting data (the product A) 8A, the setting data (the product B) 8B, ... is omitted.

When the communicable range of the NFC reader/writer 9 of the production equipment 1 is assumed to be a circular communicable range T1, a communication distance R1 of the NFC reader/writer 9 of the production equipment 1 corresponds to a radius of the communicable range T1. The communication distance R1 is equal to or smaller than a half a distance D12 between the center C1 of the production equipment 1 and the center C2 of the production equipment 2. In the communicable range T1, the NFC tag 10 of the production equipment 2 is included, and the NFC tag 10 of the production equipment 1 is not included.

Similarly, when the communicable range of the NFC reader/writer 9 of the production equipment 2 is assumed to be a circular communicable range T2, a communication distance R2 of the NFC reader/writer 9 of the production equipment 2 corresponds to a radius of the communicable range T2. The communication distance R2 is equal to or smaller than a half a distance D23 between the center C2 of the production equipment 2 and the center C3 of the production equipment 3. In the communicable range T2, the NFC tag 10 of the production equipment 3 is included, and the NFC tag 10 of the production equipment 2 is not included.

According to the production equipment system 100, the production equipment 2 receives the setting data (the product A) 8A from the production equipment 1 that is adjacently installed and performs setting of operations in the production equipment 2 on the basis of the setting data (the product A) 8A. Similarly, according to the production equipment system 100, the production equipment 3 receives the setting data (the product A) 8A from the production equipment 2 that is adjacently installed and performs setting of operations in the production equipment 3 on the basis of the setting data (the product A) 8A. In accordance with this, when all the setting data (the product A) 8A of a plurality of pieces of production equipment 1 to 3 is supplied to the production equipment 1, by causing the setting data (the product A) 8A to go through the pieces of production equipment 1 to 3, all the settings of operations in the plurality of pieces of production equipment 1 to 3 can be performed.

According to the production equipment system 100, a worker only supplies all the setting data (the product A) 8A of the plurality of pieces of production equipment 1 to 3 to the production equipment 1, and thus, the number of work processes performed by the worker is small. For this reason, worker's mistakes in setting the pieces of production equipment 1 to 3 do not easily occur. In addition, according to the production equipment system 100, each time replacement and/or rearrangement of the pieces of production equipment 1 to 3 are performed, insertion and extraction of wirings for the pieces of production equipment 1 to 3 are not necessary. Thus, worker's mistakes in setting the pieces of production equipment 1 to 3 do not easily occur due to a decrease in the number of work processes performed by the worker, and mistakes in setting the pieces of production equipment 1 to 3 due to a defect in insertion and extraction of wirings do not occur. Therefore, the production equipment system 100 in which mistakes in setting the pieces of production equipment 1 to 3 do not easily occur can be realized.

In addition, in a case in which the production equipment system 100 produces a product B, in the description presented above, the product A may be replaced with the product B, and the setting data (the product A) 8A may be replaced with setting data (the product B) 8B. This similarly applies also to a case in which the production equipment system 100 produces a product other than the product A or the product B.

In addition, a production method according to this embodiment is a production method using a plurality of pieces of production equipment 1 to 3 being movable and configuring a production line using a cell production manner, in which a proximity wireless communication unit 6 having a communication distance that is equal to or smaller than a half a distance between centers of the pieces of production equipment in a state of being adjacently installed is disposed in each of at least some of the pieces of production equipment among the plurality of pieces of production equipment 1 to 3 being movable, and setting of operations in a piece of production equipment is performed using setting data received by the proximity wireless communication unit 6 from a piece of production equipment that is adjacently installed.

### 2. Configuration Example

In the production equipment system 100, communication using the proximity wireless communication unit 6 is NFC not requiring in-advance connection setting. In a case in which LAN cables are used as wirings in the work described in (b) above, there is concern that production equipment which is able to communicate may be limited in accordance with IP addresses. According to the production equipment system 100, communication using the proximity wireless communication unit 6 does not require in-advance connection setting and may be the NFC as a specific example, and thus the pieces of production equipment 1 to 3 can communicate with each other without having such a limitation.

The production equipment system 100 has a configuration in which the NFC reader/writer 9 of production equipment on the upstream side and the NFC tag 10 of production equipment on the downstream side communicate with each other. In accordance with this, each of the pieces of production equipment 1 to 3 can supply the setting data (the product A) 8A, the setting data (the product B) 8B, ... in order from production equipment disposed on the upstream side to production equipment disposed on the downstream side in the flow of the setting data (the product A) 8A, the setting data (the product B) 8B, .... Thus, all the settings of operations in the plurality of pieces of production equipment 1 to 3 can be performed in this order.

However, this is merely one configuration example of the proximity wireless communication unit 6. In other words, also in the case of a configuration in which the NFC tag 10 of production equipment on the upstream side and the NFC reader/writer 9 of production equipment on the downstream side communicate with each other, similar operations and effects can be acquired. In addition, a configuration in which communication devices performing communication through NFC are respectively disposed in production equipment on the upstream side and production equipment on the downstream side, and the communication devices perform bidirectional communication may be employed.

The communication using the proximity wireless communication unit 6 is not limited to NFC as long as the communication has a communication distance that is equal to or shorter than a half a distance between centers of the pieces of production equipment in the state of being adjacently installed.

In the production equipment system 100, among the pieces of production equipment 1 to 3, the production equipment 1 furthest upstream in the flow of the setting data (product A) 8A, the setting data (product B) 8B, ... accepts the setting data (product A) 8A, the setting data (product B) 8B, ... that are all the setting data of the pieces of production equipment 1 to 3. More specifically, in the production equipment system 100, among the pieces of production equipment 1 to 3, the setting data (product A) 8A, the setting data (product B) 8B, ... that are all the setting data of the pieces of production equipment 1 to 3 are stored in the storage unit 5 of the production equipment 1 of the furthest upstream in the flow of the setting data (product A) 8A, the setting data (product B) 8B, ....

In accordance with this, the setting data (product A) 8A, the setting data (product B) 8B, ... can be supplied to the production equipment 1 of the furthest upstream in the flow of the setting data (product A) 8A, the setting data (product B) 8B, ... among the pieces of production equipment 1 to 3.

Meanwhile, precisely, the NFC tag 10 of the production equipment 1 is not responsible for the function of the proximity wireless communication unit 6 in the production equipment system 100. Here, in a case in which the production equipment 1 is not on the furthest upstream in the flow of the setting data (product A) 8A, the setting data (product B) 8B, ..., the NFC tag 10 of the production equipment 1 communicates with the NFC reader/writer 9 of production equipment corresponding to the right upstream side of the production equipment 1. Then, the setting processing unit 7 of the production equipment 1 performs setting of operations in the production equipment 1 using the setting data (product A) 8A, the setting data (product B) 8B, ... received by the proximity wireless communication unit 6 of the production equipment 1 from the proximity wireless communication unit 6 of the production equipment that is adjacently installed.

The flow of the setting data (product A) 8A, the setting data (product B) 8B, ... in the production equipment system 100 may be either in a forward direction or in a reverse direction with respect to a production line according to the cell production manner of the production equipment system 100.

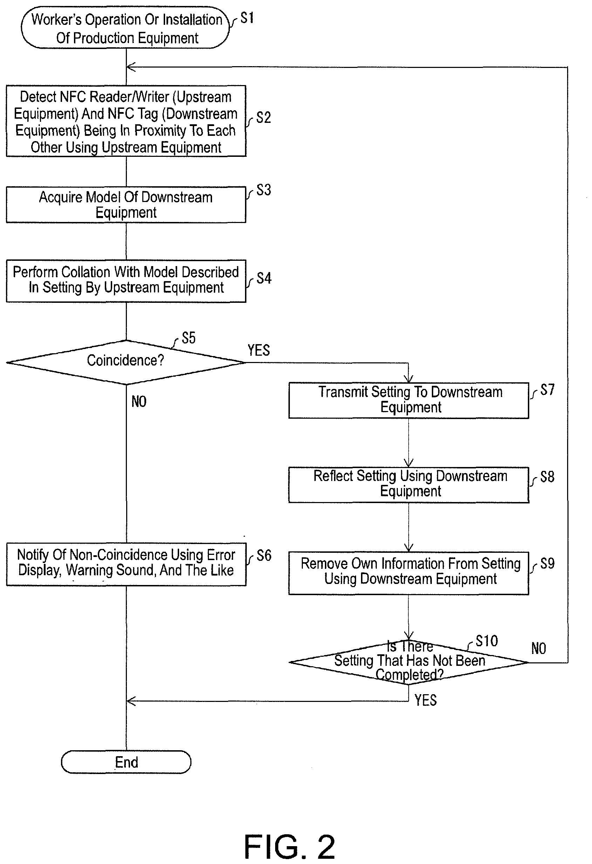

Fig. 2 is a flowchart illustrating the flow of an operation of the production equipment system 100.

First, each of the pieces of production equipment 1 to 3 are installed, and a worker operates the production equipment 1. In the operation, a worker selects a product to be produced by the production equipment system 100 by using the product selecting device 4. Here, a case in which a product A is selected as the product to be produced by the production equipment system 100 will be described as an example (Step S1). In Step S1, a transition to Step S2 may be performed with the worker's operation used as a trigger, or a transition to Step S2 may be performed with completion of installation of each of the pieces of production equipment 1 to 3 after the operation used as a trigger.

Subsequently, the production equipment 1 (upstream equipment) detects that the NFC reader/writer 9 of the production equipment 1 and the NFC tag 10 of the production equipment 2 (downstream equipment) are in proximity to each other. This detection can be performed based on whether or not the NFC reader/writer 9 of the production equipment 1 can communicate with the NFC tag 10 of the production equipment 2 (Step S2).

Subsequently, the production equipment 1 acquires a model of the production equipment 2. When the NFC reader/writer 9 of the production equipment 1 and the NFC tag 10 of the production equipment 2 communicate with each other, the model of the production equipment 2 can be easily acquired (Step S3).

Subsequently, the production equipment 1 collates the model of the production equipment 2 acquired in Step S3 and a model of the production equipment 2 defined in the setting data (product A) 8A with each other (Step S4) and determines whether or not these coincide with each other (Step S5). In a case in which these do not coincide with each other (a result of Step S5 is No), for example, error display and/or a warning is performed using the production equipment 1, and no coincidence thereof is notified (Step S6). In accordance with this, in the production equipment system 100, a mistake in the production equipment can be detected. After Step S6, the operation illustrated in Fig. 2 ends.

In a case in which the model of the production equipment 2 acquired in Step S3 and the model of the production equipment 2 defined in the setting data (product A) 8A coincide with each other (a result of Step S5 is Yes), the setting data (product A) 8A is written from the NFC reader/writer 9 of the production equipment 1 into the NFC tag 10 of the production equipment 2 (Step S7).

Subsequently, the setting processing unit 7 of the production equipment 2 performs setting of operations in the production equipment 2 using the setting data (product A) 8A received by the NFC tag 10 of the proximity wireless communication unit 6 from the production equipment 1 (Step S8).

Subsequently, as is necessary, the setting processing unit 7 of the production equipment 2 deletes information relating to setting of operations in the production equipment 2 from the setting data (product A) 8A (Step S9).

Subsequently, in a case in which there is production equipment of which setting of operations has not been completed among the pieces of production equipment 1 to 3 (a result of Step S10 is No), the process returns to Step S2. In a case in which the setting of operations in the production equipment 2 is performed through Steps S2 to S10 described above, next, setting of operations in the production equipment 3 is performed. As the setting of operations in the production equipment 3, in the setting of operations in the production equipment 2 described above, the upstream equipment is set as the production equipment 2, and the downstream equipment is set as the production equipment 3, and then the flow of operations similar to Steps S2 to S10 is formed.

When the setting of operations in all the pieces of production equipment 1 to 3 is completed, the operation illustrated in Fig. 2 ends (in other words, a result of Step S10 is Yes).

In a case in which the production equipment system 100 produces a product B, in the description presented above, the product A may be replaced with the product B, and the setting data (product A) 8A may be replaced with the setting data (product B) 8B. This similarly applies also to a case in which the production equipment system 100 produces a product other than the product A or the product B.

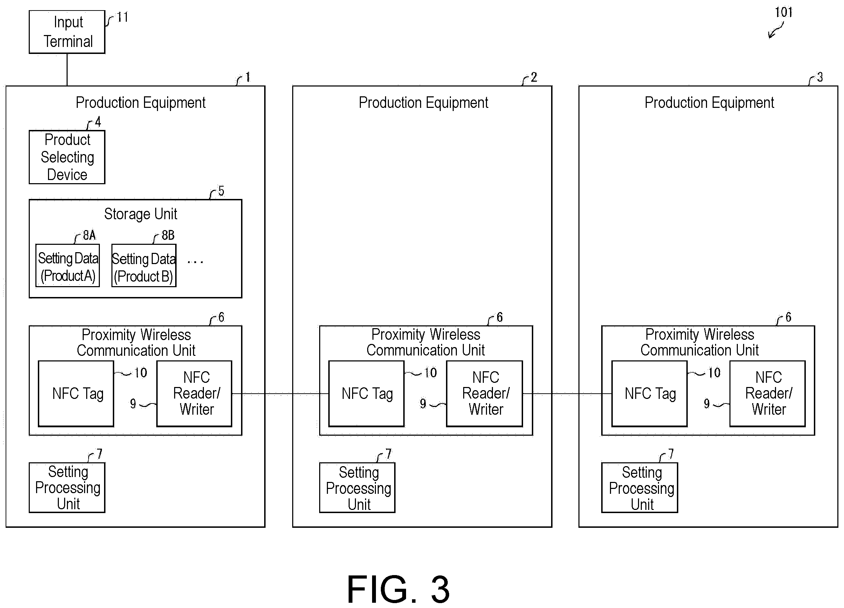

Fig. 3 is a block diagram illustrating a schematic configuration of a production equipment system 101 according to a modified example of this embodiment. The configuration of the production equipment system 101 includes an input terminal 11 in addition to the configuration of the production equipment system 100. The input terminal 11 inputs setting data (product A) 8A, setting data (product B) 8B, ... to the production equipment 1. An example of the input terminal 11 includes a terminal represented by a smartphone, a personal computer, or the like that includes an NFC reader/writer.

The production equipment system 101 includes the input terminal 11 that is used for inputting the setting data (product A) 8A, the setting data (product B) 8B, ... that are all the setting data of the pieces of production equipment 1 to 3 to the production equipment 1 of the furthest upstream in the flow of the setting data (product A) 8A, the setting data (product B) 8B, ... among the pieces of production equipment 1 to 3. Also in accordance with this, the setting data (product A) 8A, the setting data (product B) 8B, ... can be supplied to the production equipment 1 of the furthest upstream in the flow of the setting data (product A) 8A, the setting data (product B) 8B, ... among the pieces of production equipment 1 to 3. In addition, according to the production equipment system 101, the setting data (product A) 8A, the setting data (product B) 8B, ... can be supplied to the production equipment 1 after checking the model and the like of the production equipment 1 using the input terminal 11, and thus, a mistake in the production equipment 1 can be prevented. Furthermore, according to the production equipment system 101, an operation of rewriting the setting data (product A) 8A, the setting data (product B) 8B, ... for the production equipment system 101 that is being operated does not need to be performed, and thus inappropriate rewriting during the operation of the production equipment system 101 can be prevented. In addition, according to the production equipment system 101, the setting data (product A) 8A, the setting data (product B) 8B, ... are recorded in the input terminal 11, and thus a concern of losing the setting data (product A) 8A, the setting data (product B) 8B, ... according to data rewriting in the production equipment 1 can be reduced.

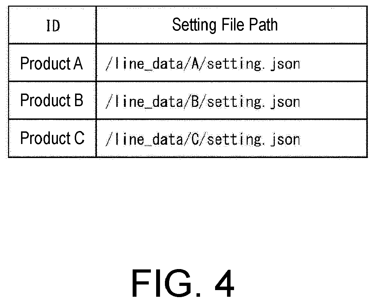

Fig. 4 is a table illustrating one example of association between a type of product to be produced and setting data (setting information of each piece of production equipment for producing the product).

In Fig. 4, the association described above is implemented on the basis of a table that is composed of a type of a product to be produced (an ID column) and a file path of setting data corresponding to each item (setting file path column). A model and details of each item represented in the ID column illustrated in Fig. 4 are not particularly limited and may be an identifier. In addition, each piece of setting data represented in the setting file path column illustrated in Fig. 4 is not particularly limited and may be a description of the setting.

Although the table illustrated in Fig. 4 has two columns, the association described above may be implemented on the basis of a table having three or more columns.

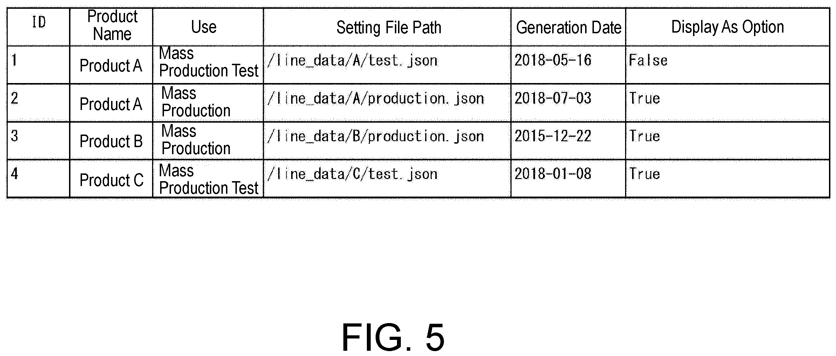

Fig. 5 is a table illustrating another example of association between a type of product to be produced and setting data (setting information of each piece of production equipment for producing the product).

In Fig. 5, the association described above is implemented on the basis of a table composed of a serial number from 1 (an ID column), a type of product to be produced that corresponds to each item (a product name column), an operation use of the production equipment system that corresponds to each item (a use column), a file path of setting data corresponding to each item (a setting file path column), a generation date of setting data corresponding to each item (a generation date column), and an indication representing whether or not setting data corresponding to each item is displayed as an option (a column that is displayed as an option).

The association described above is not limited to the form of a table as illustrated in Figs. 4 and 5.

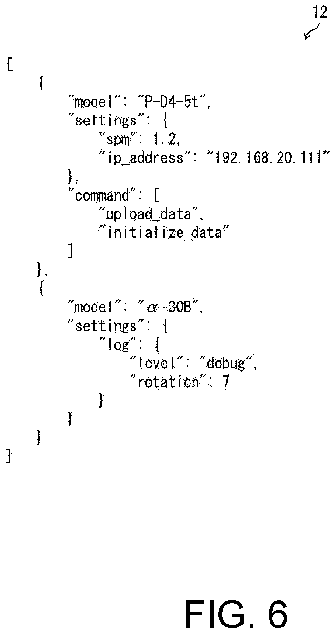

Fig. 6 is a diagram illustrating a specific example of setting data 12.

In the setting data 12, upstream equipment acquires a model of downstream equipment and then checks coincidence/no-coincidence by comparing the acquired model with "model" of first production equipment in the arrangement. In the case of coincidence, the setting is transmitted. In addition, the information represented in "model" of the setting data 12 may be any identifier of production equipment, and thus, precisely, does not need to be a model (for example, an ID defined by of a user, an ID (IDm) at the time of producing the NFC tag)).

In the setting data 12, downstream equipment receives the setting described above, then acquires "settings" of first production equipment in the arrangement, reflects the settings described therein in values of variables and details of the file, and executes a command in a case in which "command" is designated, deletes the information of its own production equipment from the arrangement, and then transmits the data to a production equipment disposed on a further downstream side.

The setting data 12 illustrated in Fig. 6 is a JSON file but is not limited thereto. Various formats such as JSON, INI, XML, YAML, TOML, binary, and the like may be considered to be used.

In the setting data 12, points to be focused on are as (1) to (3).

(1) Upstream equipment can identify information of production equipment disposed on the right downstream side (identification method: first element in the arrangement, order described in one setting item (for example: "order":!)).
(2) A setting and a command can be described for each piece of production equipment (a model and details may be configured such that they can be received and interpreted by downstream production equipment).
(3) Execution orders such as execution of commands after changing the setting and a method of determination of an execution order of commands are determined by the downstream equipment.

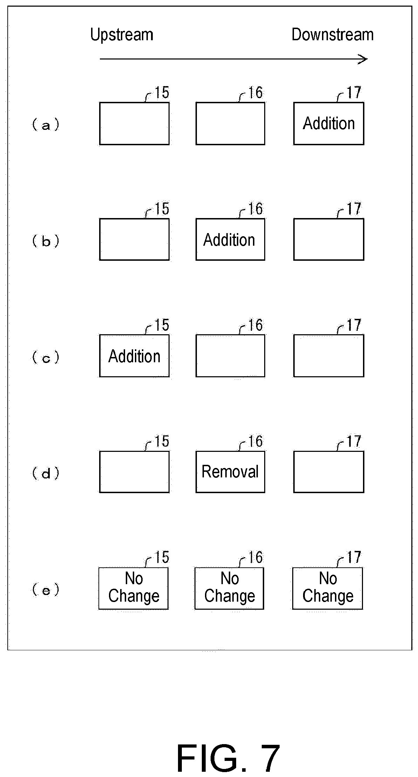

(a) to (e) of Fig. 7 are schematic diagrams illustrating installation patterns of a plurality of pieces of production equipment 15 to 17.

The installation pattern illustrated in (a) of Fig. 7 is an example in which production equipment 17 is added and is the same as the installation pattern of the pieces of production equipment 1 to 3 illustrated in Figs. 1 and 3.

The installation pattern illustrated in (b) of Fig. 7 is an example in which production equipment 16 is added. In this case, reception of the setting data from the production equipment 15 and reflection of the setting and checking of a model of the production equipment 17 and transmission of the setting data to the production equipment 17 are performed within the same period. For simplification of the process flow and inhibition of occurrence of an abnormality, in a case in which one thereof is performed, the other may be configured not to be performed.

The installation pattern illustrated in (c) of Fig. 7 is an example in which production equipment 15 is added and, in a case in which upstream/downstream is not considered, it can be handled similar to the installation pattern illustrated in (a) of Fig. 7.

The installation pattern illustrated in (d) of Fig. 7 is an example in which production equipment 16 is removed and, in order to automatically detect removal, communication between the production equipment 15 and the production equipment 16 may be regularly executed, and the production equipment may be determined to have been removed in the case of a failure of the communication. In such a case, for example, a result of the determination may be displayed as an error.

The installation pattern illustrated in (e) of Fig. 7 is an example in which there is no change in the installation of production equipment 15 to 17, and setting can be performed by being triggered upon a user's operation. For example, the installation pattern illustrated in (e) illustrated in Fig. 7 is used in a case in which only the setting of at least one of pieces of the production equipment 15 to 17 is changed without changing the installation patterns of the production equipment 15 to 17 in accordance with a change in products to be produced.

All the production equipment configuring the production equipment system does not essentially need to include the proximity wireless communication unit 6 and the setting processing unit 7 (see Fig. 1 and the like). Production equipment not requiring the functions of the proximity wireless communication unit 6 and the setting processing unit 7 may be configured not to include the proximity wireless communication unit 6 and the setting processing unit 7. In other words, at least some of pieces of production equipment among a plurality of pieces of production equipment being movable may be configured to include the proximity wireless communication unit 6 and the setting processing unit 7.

### [Example of realization using software]

The setting processing unit 7 may be realized by a logic circuit (hardware) formed on an integrated circuit (IC chip) or the like or may be realized by software.

In the latter case, for example, each of the production equipment systems 100 and 101 includes a computer that executes commands of a program that is software realizing each function. This computer, for example, includes one or more processors and includes a computer-readable recording medium storing the program described above. Then, in the computer described above, the processors described above read the program described above from the recording medium described above and execute the read program, whereby the objective of the present invention is achieved. As the processor described above, for example, a central processing unit (CPU) may be used. As the recoding medium described above, "a medium of a non-transitory type", for example, in addition to a read only memory (ROM) or the like, a tape, a disk, a card, a semiconductor memory, a programmable logic circuit, or the like may be used. In addition, a random access memory (RAM) or the like into which the program described above is loaded may be further included. In addition, the program described above may be supplied to the computer described above through an arbitrary transmission medium (a communication network, a broadcast wave, or the like) that can transmit the program. Furthermore, one aspect of the present invention may be realized in the form of data signal embedded in a carrier wave in which the program described above is implemented through electronic transmission.

In order to solve the problems described above, a production equipment system according to one aspect of the present invention is a production equipment system including a plurality of pieces of production equipment being movable and configuring a production line using a cell production manner, in which each of at least some of the pieces of production equipment among the plurality of pieces of production equipment being movable including: a proximity wireless communication unit configured to have a communication distance that is equal to or smaller than a half a distance between centers of the pieces of production equipment in a state of being adjacently installed; and a setting processing unit configured to perform setting of operations in a piece of production equipment using setting data received by the proximity wireless communication unit from a piece of production equipment that is adjacently installed.

In order to solve the problems described above, a production method according to one aspect of the present invention is a production method using a plurality of pieces of production equipment being movable and configuring a production line using a cell production manner, in which a proximity wireless communication unit having a communication distance that is equal to or smaller than a half a distance between centers of the pieces of production equipment in a state of being adjacently installed is disposed in each of at least some of the pieces of production equipment among the plurality of pieces of production equipment being movable, the production method including performing setting of operations in a piece of production equipment using setting data received by the proximity wireless communication unit from a piece of production equipment that is adjacently installed.

According to the configuration described above, the production equipment receives setting data from production equipment that is adjacently installed and performs setting of operations in the production equipment on the basis of the setting data. In accordance with this, when all the setting data of a plurality of pieces of production equipment is supplied to one of the plurality of pieces of the production equipment, by causing the setting data to go through each of the pieces of the production equipment, all the settings of operations in the plurality of pieces of production equipment can be performed.

According to the configuration described above, a worker only supplies all the setting data of the plurality of pieces of production equipment to one of the plurality of pieces of production equipment, and thus, the number of work processes performed by the worker is small. For this reason, worker's mistakes in setting the production equipment does not easily occur. In addition, according configuration described above, each time replacement and/or rearrangement of the production equipment are performed, insertion and extraction of wirings for each of the pieces of production equipment are not necessary. Thus, worker's mistakes in setting the production equipment do not easily occur due to a decrease in the number of work processes performed by the worker, and mistakes in setting the production equipment due to a defect in insertion and extraction of wirings do not occur. Therefore, according to the configuration described above, a production equipment system and a production method in which mistakes in setting production equipment do not easily occur can be realized.

In addition, in the production equipment system according to one aspect of the present invention, communication using the proximity wireless communication unit may be configured not to require in-advance connection setting.

Particularly, in the production equipment system according to one aspect of the present invention, the communication using the proximity wireless communication unit may be configured to be near field communication (NFC).

In a case in which local area network (LAN) cables are used as wirings in the work described in (b) above, there is concern that communicable production equipment may be limited in accordance with IP addresses. According to the configuration described above, communication using the proximity wireless communication unit does not require in-advance connection setting and may be the NFC as a specific example, and thus the production equipment can communicate with each other without having such a limitation.

In addition, in the production equipment system according to one aspect of the present invention, each of at least some of the pieces of production equipment may be configured to include an upstream-side communication unit communicating with the proximity wireless communication unit of the piece of production equipment on a downstream side in the flow of the setting data and a downstream-side communication unit communicating with the proximity wireless communication unit of the piece of production equipment on an upstream side in the flow of the setting data as the proximity wireless communication unit.

According to the configuration described above, each of at least some of the pieces of production equipment can supply the setting data in order from the production equipment on the upstream side in the flow of the setting data to the production equipment on the downstream side therein. Thus, all the settings of operations of the plurality of pieces of production equipment can be performed in this order.

In addition, in the production equipment system according to one aspect of the present invention, the piece of production equipment of a furthest upstream in the flow of the setting data among the plurality of pieces of production equipment being movable may be configured to accept all the setting data of the plurality of pieces of production equipment being movable.

Furthermore, in the production equipment system according to one aspect of the present invention, all the setting data of the plurality of pieces of production equipment being movable may be configured to be stored in the piece of production equipment of the furthest upstream in the flow of the setting data among the plurality of pieces of production equipment being movable.

In addition, the production equipment system according to one aspect of the present invention may be configured to further include an input terminal used for inputting all the setting data of the plurality of pieces of production equipment being movable to the piece of production equipment of the furthest upstream in the flow of the setting data among the plurality of pieces of production equipment being movable.

According to the configuration described above, setting data can be supplied to the production equipment of the furthest upstream in the flow of the setting data among the plurality of pieces of production equipment being movable. Particularly, in a case in which the input terminal is included, the setting data can be supplied to the production equipment of the furthest upstream after checking the model and the like of the production equipment of the furthest upstream using the input terminal, and thus, a mistake in the production equipment of the furthest upstream can be prevented. Furthermore, in the case in which the input terminal is included, an operation of rewriting the setting data for the production equipment system that is being operated does not need to be performed, and thus inappropriate rewriting during the operation of the production equipment system can be prevented. In addition, in the case in which the input terminal is included, the setting data is recorded in the input terminal, and thus a concern of losing the setting data according to data rewriting in the production equipment of the furthest upstream can be reduced.

In addition, in the production equipment system according to one aspect of the present invention, a type of product to be produced and setting information of each piece of production equipment for producing the product may be configured to be associated with each other in the setting data.

According to the configuration described above, the setting of production equipment for responding to production of a product to be produced can be performed.

In addition, in the production equipment system according to one aspect of the present invention, when the product is selected, the setting data corresponding to the product being selected may be configured to flow.

According to the configuration described above, the setting of production equipment for responding to production of a product to be produced can be performed using selection of the product to be produced as a trigger.

In addition, the production equipment included in the production equipment system described above also belongs to the scope of the present invention.

### [Reference Signs List]

1 production equipment
2 production equipment
3 production equipment
4 product selecting device
5 storage unit
6 proximity wireless communication unit
7 setting processing unit
8A setting data (product A)
8B setting data (product B)
9 NFC reader/writer
10 NFC tag
11 input terminal
12 setting data
15 production equipment
16 production equipment
17 production equipment
100 production equipment system
101 production equipment system

## Claims

1. A production equipment system (100, 101) comprising a plurality of pieces of production equipment (1, 2, 3) being movable and configuring a production line using a cell production manner, wherein the cell production manner is a production manner in which one or several workers are responsible for all processes of mounting, assembling, processing, and testing of parts in an assembly manufacturing industry;
wherein
each of the pieces of production equipment (1, 2, 3) includes:
a proximity wireless communication unit (6) configured to have a communication distance (R1, R2) that is equal to or smaller than a half a distance (D12, D23) between centers (C1, C2, C3) of the pieces of production equipment (1, 2, 3) in a state of being adjacently installed; and
a setting processing unit (7) configured to perform setting of operations in a piece of production equipment (1, 2, 3) using setting data (8A, 8B) received by the proximity wireless communication unit (6) from a piece of production equipment (1, 2, 3) that is adjacently installed;
wherein each of at least some of the pieces of production equipment (1, 2, 3) includes an upstream-side communication unit (9) communicating with the proximity wireless communication unit (6) of the piece of production equipment (1, 2, 3) on a downstream side in the flow of the setting data (8A, 8B) and a downstream-side communication unit (10) communicating with the proximity wireless communication unit (6) of the piece of production equipment (1, 2, 3) on an upstream side in the flow of the setting data (8A, 8B) as the proximity wireless communication unit (6);
wherein a type of product to be produced and setting information of each piece of production equipment (1, 2, 3) for producing the product are associated with each other in the setting data (8A, 8B);
wherein the setting information of each piece of production equipment (1, 2, 3) includes an information indicating a model of each piece of production equipment (1, 2, 3);
wherein one of the at least some of the pieces of production equipment (1, 2, 3) is referred to as an upstream equipment (1, 2), and a production equipment (2, 3) disposed on the downstream side and installed adjacent to the upstream equipment (1, 2) is referred to as a downstream equipment (2, 3), and
wherein the production equipment system (100, 101) is **characterized in that**,
the upstream equipment (1, 2) is configured to:
acquire a model of the downstream equipment (2, 3) from the downstream equipment (2, 3) by communication between the upstream-side communication unit (9) in the upstream equipment (1, 2) and the downstream-side communication unit (10) in the downstream equipment (2, 3);
acquire a model of the downstream equipment (2, 3) described in the setting data stored in the piece of production equipment (1) of a furthest upstream in the flow of the setting data from the piece of production equipment (1) of the furthest upstream, among the plurality of pieces of production equipment (1, 2, 3) being movable; and
collate the model of the downstream equipment (2, 3) acquired from the downstream equipment (2, 3) with the model of the downstream equipment (2, 3) acquired from the piece of production equipment (1) of the furthest upstream, and determine whether or not the two models coincide with each other, and when the two models do not match with each other, non-coincidence thereof is notified.

2. The production equipment system (100, 101) according to claim 1, wherein in-advance connection setting is not necessary for communication using the proximity wireless communication unit (6).

3. The production equipment system (100, 101) according to claim 2, wherein the communication using the proximity wireless communication unit (6) is NFC.

4. The production equipment system (100, 101) according to any one of claims 1 to 3, wherein the piece of production equipment (1) of the furthest upstream in the flow of the setting data (8A, 8B) among the plurality of pieces of production equipment (1, 2, 3) being movable accepts all the setting data (8A, 8B) of the plurality of pieces of production equipment (1, 2, 3) being movable.

5. The production equipment system (100, 101) according to claim 4, wherein all the setting data (8A, 8B) of the plurality of pieces of production equipment (1, 2, 3) being movable is stored in the piece of production equipment (1) of the furthest upstream in the flow of the setting data (8A, 8B) among the plurality of pieces of production equipment (1, 2, 3) being movable.

6. The production equipment system (100, 101) according to claim 4 or 5, further comprising an input terminal (11) used for inputting all the setting data (8A, 8B) of the plurality of pieces of production equipment (1, 2, 3) being movable to the piece of production equipment (1) of the furthest upstream in the flow of the setting data (8A, 8B) among the plurality of pieces of production equipment (1, 2, 3) being movable.

7. The production equipment system (100, 101) according to claim 1, wherein, when the product is selected, the setting data (8A, 8B) corresponding to the product being selected flows.

8. A production method using a plurality of pieces of production equipment (1, 2, 3) being movable and configuring a production line using a cell production manner, wherein the cell production manner is a production manner in which one or several workers are responsible for all processes of mounting, assembling, processing, and testing of parts in an assembly manufacturing industry,
wherein a proximity wireless communication unit (6) having a communication distance (R1, R2) that is equal to or smaller than a half a distance (D12, D23) between centers of the pieces of production equipment (1, 2, 3) in a state of being adjacently installed is disposed in each of the pieces of production equipment (1, 2, 3), and
the production method comprising performing setting of operations in a piece of production equipment (1, 2, 3) using setting data (8A, 8B) received by the proximity wireless communication unit (6) from a piece of production equipment (1, 2, 3) that is adjacently installed,
wherein each of at least some of the pieces of production equipment (1, 2, 3) includes an upstream-side communication unit (9) communicating with the proximity wireless communication unit (6) of the piece of production equipment (1, 2, 3) on a downstream side in the flow of the setting data (8A, 8B) and a downstream-side communication unit (10) communicating with the proximity wireless communication unit (6) of the piece of production equipment (1, 2, 3) on an upstream side in the flow of the setting data (8A, 8B) as the proximity wireless communication unit (6);
wherein a type of product to be produced and setting information of each piece of production equipment (1, 2, 3) for producing the product are associated with each other in the setting data (8A, 8B);
wherein the setting information of each piece of production equipment (1, 2, 3) includes an information indicating a model of each piece of production equipment (1, 2, 3);
wherein one of the at least some of the pieces of production equipment (1, 2, 3) is referred to as an upstream equipment (1, 2), and a production equipment (2, 3) disposed on the downstream side and installed adjacent to the upstream equipment (1, 2) is referred to as a downstream equipment (2, 3), and
wherein the production method is **characterized in that**,
the upstream equipment (1, 2) is configured to:
acquire a model of the downstream equipment (2, 3) from the downstream equipment (2, 3) by communication between the upstream-side communication unit (9) in the upstream equipment (1, 2) and the downstream-side communication unit (10) in the downstream equipment (2, 3);
acquire a model of the downstream equipment (2, 3) described in the setting data stored in the piece of production equipment (1) of a furthest upstream in the flow of the setting data from the piece of production equipment (1) of the furthest upstream, among the plurality of pieces of production equipment (1, 2, 3) being movable; and
collate the model of the downstream equipment (2, 3) acquired from the downstream equipment (2, 3) with the model of the downstream equipment (2, 3) acquired from the piece of production equipment (1) of the furthest upstream, and determine whether or not the two models coincide with each other, and when the two models do not match with each other, non-coincidence thereof is notified.

## Patentansprüche

1. Produktionsausrüstungssystem (100, 101), das eine Vielzahl von Produktionsausrüstungsstücken (1, 2, 3) umfasst, die beweglich sind und eine Produktionslinie unter Verwendung einer Zellenproduktionsweise konfigurieren, wobei die Zellenproduktionsweise eine Produktionsweise ist, bei der ein oder mehrere Arbeiter für alle Prozesse der Montage, des Zusammenbaus, der Verarbeitung und des Testens von Teilen in einer Zusammenbauherstellungsindustrie verantwortlich sind;
wobei
jedes der Produktionsausrüstungsstücke (1, 2, 3) enthält:
eine drahtlose Proximity-Kommunikationseinheit (6), die konfiguriert ist, um einen Kommunikationsabstand (R1, R2) aufzuweisen, der gleich oder kleiner als ein halber Abstand (D12, D23) zwischen Mitten (C1, C2, C3) der Produktionsausrüstungsstücke (1, 2, 3) in einem Zustand des benachbart installiert seins; und
eine Einstellungsverarbeitungseinheit (7), die konfiguriert ist, um Einstellvorgänge in einem Produktionsausrüstungsstück (1, 2, 3) unter Verwendung von Einstelldaten (8A, 8B) durchzuführen, die von der drahtlosen Proximity-Kommunikationseinheit (6) von einem Produktionsausrüstungsstück (1, 2, 3) empfangen werden, das benachbart installiert ist;
wobei jedes von wenigstens einigen der Produktionsausrüstungsstücken (1, 2, 3) eine stromaufwärts gelegene Kommunikationseinheit (9), die mit der drahtlosen Proximity-Kommunikationseinheit (6) des Produktionsausrüstungsstücks (1, 2, 3) auf einer stromabwärts gelegenen Seite in dem Fluss der Einstelldaten (8A, 8B) kommuniziert, und eine stromabwärts gelegene Kommunikationseinheit (10), die mit der drahtlosen Proximity-Kommunikationseinheit (6) des Produktionsausrüstungsstücks (1, 2, 3) auf einer stromaufwärts gelegenen Seite in dem Fluss der Einstelldaten (8A, 8B) als die drahtlose Proximity-Kommunikationseinheit (6) kommuniziert;
wobei eine Art von produzierendem Produkt und Einstellinformationen jedes Produktionsausrüstungsstücks (1, 2, 3) zur Herstellung des Produkts in den Einstelldaten (8A, 8B) einander zugeordnet sind;
wobei die Einstellinformationen jedes Produktionsausrüstungsstücks (1, 2, 3) Informationen enthalten, die ein Modell jedes Produktionsausrüstungsstücks (1, 2, 3) angeben;
wobei eines der wenigstens einigen der Produktionsausrüstungsstücke (1, 2, 3) als eine stromaufwärts gelegene Ausrüstung (1, 2) bezeichnet wird und eine Produktionsausrüstung (2, 3), die auf der stromabwärts gelegenen Seite angeordnet und benachbart zu der stromaufwärts gelegenen Ausrüstung (1, 2) installiert ist, als eine stromabwärts gelegene Ausrüstung (2, 3) bezeichnet wird, und
wobei das Produktionsausrüstungssystem (100, 101) **dadurch gekennzeichnet ist, dass**,
die stromaufwärts gelegene Ausrüstung (1, 2) konfiguriert ist, um:
ein Modell der stromabwärts gelegenen Ausrüstung (2, 3) von der stromabwärts gelegenen Ausrüstung (2, 3) durch Kommunikation zwischen der stromaufwärts gelegenen Kommunikationseinheit (9) in der stromaufwärts gelegenen Ausrüstung (1, 2) und der stromabwärts gelegenen Kommunikationseinheit (10) in der stromabwärts gelegenen Ausrüstung (2, 3) zu erfassen;
ein Modell der stromabwärts gelegenen Ausrüstung (2, 3), beschrieben in den Einstelldaten, gespeichert in dem Produktionsausrüstungsstück (1) eines am weitesten stromaufwärts Gelegenen in dem Fluss der Einstelldaten von dem Produktionsausrüstungsstück (1) des am weitesten stromaufwärts Gelegenen unter der Vielzahl der Produktionsausrüstungsstücken (1, 2, 3), die beweglich sind, zu erfassen; und
das Modells der stromabwärts gelegenen Ausrüstung (2, 3), das von der stromabwärts gelegenen Ausrüstung (2, 3) erfasst wurde, mit dem Modell der stromabwärts gelegenen Ausrüstung (2, 3), das von dem Produktionsausrüstungsstück (1) des am weitesten stromaufwärts gelegenen erfasst wurde, zu vergleichen und zu bestimmen, ob die zwei Modelle miteinander übereinstimmen oder nicht, und wenn die zwei Modelle nicht miteinander übereinstimmen, keine Übereinstimmung davon gemeldet wird.

2. Produktionsausrüstungssystem (100, 101) gemäß Anspruch 1, wobei eine vorherige Verbindungseinstellung für Kommunikation unter Verwendung der drahtlosen Proximity-Kommunikationseinheit (6) nicht erforderlich ist.

3. Produktionsausrüstungssystem (100, 101) gemäß Anspruch 2, wobei die Kommunikation unter Verwendung der drahtlosen Proximity-Kommunikationseinheit (6) NFC ist.

4. Produktionsausrüstungssystem (100, 101) gemäß einem der Ansprüche 1 bis 3, wobei das Produktionsausrüstungsstück (1) des am weitesten stromaufwärts Gelegenen in dem Fluss der Einstelldaten (8A, 8B) unter der Vielzahl von Produktionsausrüstungsstücken (1, 2, 3), das beweglich ist, alle Einstelldaten (8A, 8B) der Vielzahl von Produktionsausrüstungsstücken (1, 2, 3) akzeptiert, die beweglich sind.

5. Produktionsausrüstungssystem (100, 101) gemäß Anspruch 4, wobei alle Einstelldaten (8A, 8B) der Vielzahl von Produktionsausrüstungsstücken (1, 2, 3), die beweglich sind, in dem Produktionsausrüstungsstück (1) des am weitesten stromaufwärts Gelegenen in dem Fluss der Einstelldaten (8A, 8B) unter der Vielzahl von Produktionsausrüstungsstücken (1, 2, 3), die beweglich sind, gespeichert sind.

6. Produktionsausrüstungssystem (100, 101) gemäß Anspruch 4 oder 5, ferner umfassend einen Eingabeanschluss (11), der zur Eingabe aller Einstelldaten (8A, 8B) der Vielzahl von Produktionsausrüstungsstücken (1, 2, 3), die beweglich sind, zu dem Produktionsausrüstungsstück (1) des am weitesten stromaufwärts Gelegenen in dem Fluss der Einstelldaten (8A, 8B) unter der Vielzahl von Produktionsausrüstungsstücken (1, 2, 3), die beweglich sind, verwendet wird.

7. Produktionsausrüstungssystem (100, 101) gemäß Anspruch 1, wobei, wenn das Produkt ausgewählt wird, die Einstelldaten (8A, 8B) entsprechend dem ausgewählten Produkt fließen.

8. Produktionsverfahren unter Verwendung einer Vielzahl von Produktionsausrüstungsstücken (1, 2, 3), die beweglich sind und eine Produktionslinie unter Verwendung einer Zellenproduktionsweise konfigurieren, wobei die Zellenproduktionsweise eine Produktionsweise ist, bei der ein oder mehrere Arbeiter für alle Prozesse der Montage, des Zusammenbaus, der Verarbeitung und des Testens von Teilen in einer Herstellungszusammenbauindustrie verantwortlich sind,
wobei eine drahtlose Proximity-Kommunikationseinheit (6) mit einem Kommunikationsabstand (R1, R2), der gleich oder kleiner ist als ein halber Abstand (D12, D23) zwischen Mitten der Produktionsausrüstungsstücke (1, 2, 3) in einem Zustand des benachbart installiert seins, in jedem der Produktionsausrüstungsstücke (1, 2, 3) angeordnet ist, und
das Produktionsverfahren Durchführen der Einstellvorgänge in einem Produktionsausrüstungsstück (1, 2, 3) unter Verwendung von Einstelldaten (8A, 8B) umfasst, die von der drahtlosen Proximity-Kommunikationseinheit (6) von einem Produktionsausrüstungsstück (1, 2, 3) empfangen werden, das benachbart installiert ist,
wobei jedes von wenigstens einigen der Produktionsausrüstungsstücke (1, 2, 3) eine stromaufwärts gelegene Kommunikationseinheit (9), die mit der drahtlosen Proximity-Kommunikationseinheit (6) des Produktionsausrüstungsstück (1, 2, 3) auf einer stromabwärts gelegenen Seite in dem Fluss der Einstelldaten (8A, 8B) kommuniziert, und eine stromabwärts gelegene Kommunikationseinheit (10), die mit der drahtlosen Proximity-Kommunikationseinheit (6) des Produktionsausrüstungsstück (1, 2, 3) auf einer stromaufwärts gelegenen Seite in dem Fluss der Einstelldaten (8A, 8B) als die drahtlose Proximity-Kommunikationseinheit (6) kommuniziert;
wobei eine Art von zu produzierendem Produkt und Einstellinformationen jedes Produktionsausrüstungsstücks (1, 2, 3) zur Herstellung des Produkts in den Einstelldaten (8A, 8B) einander zugeordnet sind;
wobei die Einstellinformationen jedes Produktionsausrüstungsstücks (1, 2, 3) Information enthalten, die ein Modell jedes Produktionsausrüstungsstücks (1, 2, 3) angeben;
wobei eines der wenigstens einigen der Produktionsausrüstungstücke (1, 2, 3) als eine stromaufwärts gelegene Ausrüstung (1, 2) bezeichnet wird und eine Produktionsausrüstung (2, 3), die auf der stromabwärts gelegenen Seite angeordnet und benachbart zu der stromaufwärts gelegenen Ausrüstung (1, 2) installiert ist, als eine stromabwärts gelegene Ausrüstung (2, 3) bezeichnet wird, und
wobei das Herstellungsverfahren **dadurch gekennzeichnet ist, dass**,
die stromaufwärts gelegene Ausrüstung (1, 2) konfiguriert ist, um:
ein Modell der stromabwärts gelegenen Ausrüstung (2, 3) von der stromabwärts gelegenen Ausrüstung (2, 3) durch Kommunikation zwischen der stromaufwärts gelegenen Kommunikationseinheit (9) in der stromaufwärts gelegenen Ausrüstung (1, 2) und der stromabwärts gelegenen Kommunikationseinheit (10) in der stromabwärts gelegenen Ausrüstung (2, 3) zu erfassen;
ein Modell der stromabwärts gelegenen Ausrüstung (2, 3), beschrieben in den Einstelldaten, gespeichert in dem Produktionsausrüstungsstück (1) eines am weitesten stromaufwärts Gelegenen in dem Fluss der Einstelldaten von dem Produktionsausrüstungsstück (1) des am weitesten stromaufwärts Gelegenen unter der Vielzahl von Produktionsausrüstungsstücken (1, 2, 3), die beweglich sind, zu erfassen; und
das Modell der stromabwärts gelegenen Ausrüstung (2, 3), das von der stromabwärts gelegenen Ausrüstung (2, 3) erfasst wurde, mit dem Modell der stromabwärts gelegenen Ausrüstung (2, 3), das von dem am weitesten stromaufwärts gelegenen Produktionsausrüstungsstück (1) erfasst wurde, zu vergleichen und zu bestimmen, ob die zwei Modelle miteinander übereinstimmen oder nicht, und wenn die zwei Modelle nicht miteinander übereinstimmen, keine Übereinstimmung davon gemeldet wird.

## Revendications

1. Système d'équipements de production (100, 101) comprenant une pluralité d'équipements de production (1, 2, 3) étant mobiles et configurant une chaîne de production en utilisant une manière de production par cellule, dans lequel la manière de production par cellule est une manière de production dans laquelle un ou plusieurs travailleurs sont responsables de tous les processus de montage, assemblage, traitement et essai de pièces dans une industrie de fabrication d'assemblage ;
dans lequel
chacun des équipements de production (1, 2, 3) inclut :
une unité de communication sans fil de proximité (6) configurée pour avoir une distance de communication (R1, R2) qui est inférieure ou égale à une moitié d'une distance (D12, D23) entre des centres (C1, C2, C3) des équipements de production (1, 2, 3) dans un état dans lequel ils sont installés de manière adjacente ; et
une unité de traitement de réglage (7) configurée pour réaliser un réglage d'opérations dans un équipement de production (1, 2, 3) en utilisant des données de réglage (8A, 8B) reçues par l'unité de communication sans fil de proximité (6) depuis un équipement de production (1, 2, 3) qui est installé de manière adjacente ;
dans lequel chacun d'au moins certains des équipements de production (1, 2, 3) inclut une unité de communication en amont (9) communiquant avec l'unité de communication sans fil de proximité (6) de l'équipement de production (1, 2, 3) en aval dans le flux des données de réglage (8A, 8B) et une unité de communication en aval (10) communiquant avec l'unité de communication sans fil de proximité (6) de l'équipement de production (1, 2, 3) en amont dans le flux des données de réglage (8A, 8B) en tant que l'unité de communication sans fil de proximité (6) ;
dans lequel un type de produit à produire et des informations de réglage de chaque équipement de production (1, 2, 3) pour produire le produit sont associés l'un à l'autre dans les données de réglage (8A, 8B) ;
dans lequel les informations de réglage de chaque équipement de production (1, 2, 3) incluent une information indiquant un modèle de chaque équipement de production (1, 2, 3),
dans lequel l'un d'au moins certains des équipements de production (1, 2, 3) est désigné en tant qu'un équipement en amont (1, 2), et un équipement de production (2, 3) disposé en aval et installé adjacent à l'équipement en amont (1, 2) est désigné en tant qu'un équipement en aval (2, 3), et
dans lequel le système d'équipements de production (100, 101) est **caractérisé en ce que**,
l'équipement en amont (1, 2) est configuré pour :
acquérir un modèle de l'équipement en aval (2, 3) à partir de l'équipement en aval (2, 3) par une communication entre l'unité de communication en amont (9) dans l'équipement en amont (1, 2) et l'unité de communication en aval (10) dans l'équipement en aval (2, 3) ;
acquérir un modèle de l'équipement en aval (2, 3) décrit dans les données de réglage stockées dans l'équipement de production (1) le plus en amont dans le flux des données de réglage à partir de l'équipement de production (1) le plus en amont, parmi la pluralité d'équipements de production (1, 2, 3) étant mobiles ; et
comparer le modèle de l'équipement en aval (2, 3) acquis à partir de l'équipement en aval (2, 3) au modèle de l'équipement en aval (2, 3) acquis à partir de l'équipement de production (1) le plus en amont, et déterminer si les deux modèles coïncident ou non l'un avec l'autre et, lorsque les deux modèles ne coïncident pas l'un avec l'autre, leur non-coïncidence est notifiée.

2. Système d'équipements de production (100, 101) selon la revendication 1, dans lequel un réglage de connexion à l'avance n'est pas nécessaire pour une communication en utilisant l'unité de communication sans fil de proximité (6).

3. Système d'équipements de production (100, 101) selon la revendication 2, dans lequel la communication en utilisant l'unité de communication sans fil de proximité (6) est NFC.

4. Système d'équipements de production (100, 101) selon l'une quelconque des revendications 1 à 3, dans lequel l'équipement de production (1) le plus en amont dans le flux des données de réglage (8A, 9B) parmi la pluralité d'équipements de production (1, 2, 3) étant mobiles accepte toutes les données de réglage (8A, 8B) de la pluralité d'équipements de production (1, 2, 3) étant mobiles.

5. Système d'équipements de production (100, 101) selon la revendication 4, dans lequel toutes les données de réglage (8A, 8B) de la pluralité d'équipements de production (1, 2, 3) étant mobiles sont stockées dans l'équipement de production (1) le plus en amont dans le flux des données de réglage (8A, 8B) parmi la pluralité d'équipements de production (1, 2, 3) étant mobiles.

6. Système d'équipements de production (100, 101) selon la revendication 4 ou 5, comprenant en outre un terminal d'entrée (11) utilisé pour entrer toutes les données de réglage (8A, 8B) de la pluralité d'équipements de production (1, 2, 3) étant mobiles dans l'équipement de production (1) le plus en amont dans le flux des données de réglage (8A, 8B) parmi la pluralité d'équipements de production (1, 2, 3) étant mobiles.

7. Système d'équipements de production (100, 101) selon la revendication 1, dans lequel, lorsque le produit est sélectionné, les données de réglage (8A, 8B) correspondant au produit étant sélectionné s'écoulent.

8. Procédé de production utilisant une pluralité d'équipements de production (1, 2, 3) étant mobiles et configurant une chaîne de production en utilisant une manière de production par cellule, dans lequel la manière de production par cellule est une manière de production dans laquelle un ou plusieurs travailleurs sont responsables de tous les processus de montage, assemblage, traitement et essai de pièces dans une industrie de fabrication d'assemblage,
dans lequel une unité de communication sans fil de proximité (6) ayant une distance de communication (R1, R2) qui est inférieure ou égale à une moitié d'une distance (D12, D23) entre des centres des équipements de production (1, 2, 3) dans un état dans lequel ils sont installés de manière adjacente est disposée dans chacun des équipements de production (1, 2, 3), et
le procédé de production comprenant la réalisation d'un réglage d'opérations dans un équipement de production (1, 2, 3) en utilisant des données de réglage (8A, 8B) reçues par l'unité de communication sans fil de proximité (6) depuis un équipement de production (1, 2, 3) qui est installé de manière adjacente,
dans lequel chacun d'au moins certains des équipements de production (1, 2, 3) inclut une unité de communication en amont (9) communiquant avec l'unité de communication sans fil de proximité (6) de l'équipement de production (1, 2, 3) en aval dans le flux des données de réglage (8A, 8B) et une unité de communication en aval (10) communiquant avec l'unité de communication sans fil de proximité (6) de l'équipement de production (1, 2, 3) en amont dans le flux des données de réglage (8A, 8B) en tant que l'unité de communication sans fil de proximité (6) ;
dans lequel un type de produit à produire et des informations de réglage de chaque équipement de production (1, 2, 3) pour produire le produit sont associés l'un à l'autre dans les données de réglage (8A, 8B) ;
dans lequel les informations de réglage de chaque équipement de production (1, 2, 3) incluent une information indiquant un modèle de chaque équipement de production (1, 2, 3) ;
dans lequel l'un d'au moins certains des équipements de production (1, 2, 3) est désigné en tant qu'un équipement en amont (1, 2), et un équipement de production (2, 3) disposé en aval et installé adjacent à l'équipement en amont (1, 2) est désigné en tant qu'un équipement en aval (2, 3), et
dans lequel le procédé de production est **caractérisé en ce que**,
l'équipement en amont (1, 2) est configuré pour :
acquérir un modèle de l'équipement en aval (2, 3) à partir de l'équipement en aval (2, 3) par une communication entre l'unité de communication en amont (9) dans l'équipement en amont (1, 2) et l'unité de communication en aval (10) dans l'équipement en aval (2, 3) ;
acquérir un modèle de l'équipement en aval (2, 3) décrit dans les données de réglage stockées dans l'équipement de production (1) le plus en amont dans le flux des données de réglage à partir de l'équipement de production (1) le plus en amont, parmi la pluralité d'équipements de production (1, 2, 3) étant mobiles ; et
comparer le modèle de l'équipement en aval (2, 3) acquis à partir de l'équipement en aval (2, 3) au modèle de l'équipement en aval (2, 3) acquis à partir de l'équipement de production (1) le plus en amont, et déterminer si les deux modèles coïncident ou non l'un avec l'autre et, lorsque les deux modèles ne coïncident pas l'un avec l'autre, leur non-coïncidence est notifiée.
